# EUROPÄISCHE PATENTSCHRIFT

(11) **EP 2 447 051 B1**
(45) Veröffentlichungstag und Bekanntmachung des Hinweises auf die Patenterteilung: **14.06.2017**
(21) Anmeldenummer: 11185657.1
(22) Anmeldetag: 18.10.2011
(51) Int. Cl.: B29C 70/50, B29C 70/86, B29L 23/00, B29L 31/00

(54) **Verfahren zur Herstellung von endlosfaserverstärkten Kunststoffprofilen aus thermoplastischen Kunststoffen**
Method for manufacturing plastic profiles reinforced by continuous fibre made of thermoplastics
Procédé de fabrication de profilés renforcés en fibres continues à partir de matières synthétiques thermoplastiques

(30) Priorität: 26.10.2010 DE 102010049403; 24.12.2010 DE 102010056239
(43) Veröffentlichungstag der Anmeldung: 02.05.2012
(73) Patentinhaber: REHAU AG + Co, 95111 Rehau (DE)
(72) Erfinder: Honheiser, Norbert, 95152 Selbitz (DE); Ludwig, Hans-Joachim, 72654 Neckartenzlingen (DE); Michel, Peter, 95028 Hof (DE); Winter, Karlheinz, 95111 Rehau (DE); Laukant, Holger, 95032 Hof (DE); Wendel, Bettina, 90482 Nürnberg (DE)

(56) Entgegenhaltungen:
- FR-A1- 2 620 375
- US-A- 4 300 321
- US-A1- 2007 175 573

## Beschreibung

Die vorliegende Erfindung bezieht sich auf ein Verfahren zur Herstellung von endlosfaserverstärkten Kunststoffprofilen aus thermoplastischen Kunststoffen sowie ein mit dem Verfahren hergestelltes Kunststoffprofil.

Die Druckschrift DE 603 01 358 T2 offenbart ein Trägerbauteil zum Stoßabfangen für ein Fahrzeug, wobei das Bauteil ein stabförmiges Profil umfasst, welches in einer vertikalen Schnittebene parallel zur Fahrtrichtung des mit dem Bauteil versehenen Fahrzeuges ein C-förmiges Profil aufweist, welches auf seiner hinteren Fläche offen ist. Das Bauteil kann aus Verbundkunststoff durch Abformen, Pressen oder Spritzen hergestellt werden. Einsatz findet thermoplastisches Material, welches durch Fasern, wie Glasfasern oder Carbonfasern, verstärkt werden kann. Nachteilig an diesem bekannten Stand der Technik ist, dass ein offenes C-Profil gegenüber einem geschlossenen Profil bezüglich des Widerstandsmoments gegen Biegung um den Faktor 3 geringerer Werte aufweist.

Die Druckschrift EP 0 937 611 A1 offenbart einen Biegeträger, welcher durch ein geschlossenes Profil gebildet ist. Das Profil setzt sich hierbei jedoch aus zwei Halbschalen zusammen, die mittels überstehender Flansche zu dem geschlossenen Profil miteinander verbunden werden. Durch den zusätzlichen Fügeschritt ist das Profil in der Herstellung sehr aufwendig und weist aufgrund der angeformten Flansche zudem ein erhöhtes Gewicht auf.

Ein weiteres bekanntes Fertigungsverfahren für faserverstärkte Kunststoffprofile mit einer thermoplastischen Matrix ist die Pultrusion. Hierbei werden nebeneinander liegende Verstärkungsfasern durch eine Pultrusionsdüse gezogen und dabei mit Kunstharz getränkt. Nachteilig bei diesem Verfahren ist, dass nur eine Faserorientierung in Profillängsrichtung realisiert werden kann. Entsprechend sind solche Bauteile z.B. für höhere Torsionsbeanspruchungen ungeeignet. Ferner weisen derartige Profile eine gleichbleibende Querschnittsgeometrie und konstante Außenumfangswerte auf.

Beim Profil-Armierungsziehen wird das Herstellungsverfahren mit der Extrusion eines thermoplastischen Rohres begonnen. Dieses Rohr wird schon beim Abziehen aus der Extrusionsdüse durch Einziehen eines so genannten Faserrovings in Längsrichtung unidirektional verstärkt. In einem zweiten Schritt wird das extrudierte Rohr als Wickelkern benutzt, wobei in einer Wickelstation Faserschichten mit gezielter Faserorientierung auf das Rohr aufgebracht werden. Im weiteren Verlauf des Herstellungsprozesses wird das trocken bewickelte Rohr in einen Heizbereich gezogen und dort im aufgeheizten Zustand durch einen Aufweitdorn lediglich radial aufgeweitet. In diesem Bereich findet die eigentliche Tränkung und Kompaktierung der Schichten statt. Auch dieses Verfahren ist sehr aufwändig und erlaubt keine Variation der Außenumfangswerte oder der Querschnittsgeometrie des Rohres.

Die Druckschrift FR 2 620 375 A1 offenbart ein Verfahren zur Herstellung von endlosfaserverstärkten Kunststoffprofilen gemäß dem Oberbegriff des Anspruchs 1.

Der Erfindung liegt daher die Aufgabe zugrunde, ein Verfahren anzugeben, welches die schnelle und kostengünstige Herstellung eines mechanisch hoch belastbaren, endlosfaserverstärkten Kunststoffprofils ermöglicht.

Die Aufgabe wird erfindungsgemäß gelöst durch ein Verfahren zur Herstellung von endlosfaserverstärkten Kunststoffprofilen aus thermoplastischen Kunststoffen, gemäß Anspruch 1.

Erfindungsgemäß wurde erkannt, dass das Bereitstellen einer Trägerkernstruktur mit voneinander abweichenden Außenumfangswerten, sowie das Aufbringen eines Thermoplastbandes auf diese Trägerkernstruktur, zu einem in einfacher Weise herzustellenden geschlossenen Profilquerschnitt des endlosfaserverstärkten Kunststoffprofils mit variierenden Außenumfangswerten und Querschnittsgeometrien führt. Da mindestens ein Außenumfangswert mehrfach durchlaufen werden kann lassen sich entlang der Längserstreckungsrichtung des endlosfaserverstärkten Kunststoffprofils komplexe und wechselnde Querschnittsgeometrien realisieren. Die Außenumfangswerte variierend vorzugsweise um mindestens 10%, weiter vorzugsweise um mindestens 20%, noch weiter vorzugsweise um mindestens 40% zueinander. Das Kunststoffprofil ist als Kunststoffhohlprofil ausgebildet. Das Kunststoffhohlprofil kann hierbei allein durch das konsolidierte Thermoplastband gebildet sein. Die Trägerkernstruktur kann nach oder während der Konsolidierung des Thermoplastbandes aus dem Kunststoffprofil entfernt werden. Alternativ bildet die Trägerkernstruktur einen Teil des Kunststoffprofils und weist vorzugsweise selbst eine hohlförmige Querschnittsfläche oder eine mindestens einen Hohlraum aufweisende Querschnittsfläche auf. Das als Kunststoffhohlprofil ausgebildete Kunststoffprofil kann mit einem polymeren Werkstoff ausgeschäumt sein oder kann selbst aus einem zumindest teilweise geschäumten polymeren Werkstoff bestehen.

Vorzugsweise wird mindestens ein Außenumfangswert dreifach durchlaufen. Vorteilhafterweise weist die Trägerkernstrktur bzw. das Kunststoffprofil variierende Außenumfangswerte auf, die in Längserstreckungsrichtung mindestens dreifach durchlaufen werden. Eine Struktur von wechselnden Außenumfangswerten erlaubt eine gezielte Anpassung des Kunststoffprofils an die im Einsatz auftretenden Lastfälle und Belastungen.

Das Kunststoffprofil kann in ein die endgültige Kontur des Kunststoffprofils formendes Formwerkzeug eingebracht werden, wobei bedarfsweise eine erneute Erwärmung des Profils bis an oder bis über die Erweichungstemperatur der thermoplastischen Matrix des Thermoplastbandes erfolgt. Das Formwerkzeug kann insbesondere zur Biegung und/oder Faltung und/oder Verdrehung und/oder Verformung des Kunststoffprofils genutzt werden. Das Formwerkzeug kann ferner zur partiellen Umformung des Kunststoffprofils genutzt werden. Durch die erfindungsgemäße Ausbildung von abweichenden Außenumfangswerten der Trägerkernstruktur bzw. des um die Trägerkernstruktur aufgebrachten Thermoplastbandes und dem hieraus gebildeten faserverstärkten Kunststoffprofil ist in vorteilhafter Weise bereits eine zumindest grobkonturierte Form des Kunststoffprofils vorgegeben, die in den Außenabmessungen und den Außenumfangswerten zumindest im Wesentlichen der endgültigen Kontur des Kunststoffprofils entspricht. Dies ist von besonderem Vorteil, da durch die Faserverstärkung des Kunststoffprofils keine hohen Umformgrade erzielbar sind bzw. ansonsten auftretende Faserbrüche bei lokal zu hohen Umformgraden zu einer Gesamtschwächung des aus dem Kunststoffprofil hergestellten Bauteils führen würden. Des Weiteren führen die für die Umformung notwendigen Fließvorgänge innerhalb der thermoplastischen Matrix zu einer Umorientierung der Endlosfaserverstärkung. Dies kann infolge dessen zu einem Verzug des Kunststoffprofils führen, der sich durch das erfindungsgemäße Verfahren und nur geringen Umformgraden somit minimieren lässt. Das Kunststoffprofil kann als Kunststoffhohlprofil ausgebildet sein und mittels einer Innendruck-Beaufschlagung gegen die Wandungen des Formwerkzeuges gedrückt werden. Hierzu kann das Kunststoffhohlprofil an seinen Enden Dichtungselemente aufweisen. Generell können als Druckmedien jedwede fluide Medien eingesetzt werden. Als Druckmedien können insbesondere Luft oder Wasser oder Öle eingesetzt werden.

Vorzugsweise wird das Kunststoffprofil unmittelbar nach der Konsolidierung des Thermoplastbandes in das Formwerkzeug eingebracht. Hierbei kann insbesondere die aus der vorstehenden Konsolidierung verbliebene Restwärme innerhalb des Kunststoffprofils genutzt werden, sodass insgesamt die für die Herstellung des Kunststoffprofils benötigte Energie verringert werden kann.

Die Trägerkernstruktur bzw. das Kunststoffprofil kann eine kreisförmige und/oder eine ovale und/oder eine rechteckige und/oder eine vieleckige Querschnittsgeometrie aufweisen. Insbesondere eine Kombination der vorgenannten Querschnittsgeometrien innerhalb eines Kunststoffprofils ermöglicht es in vorteilhafter Weise, eine bedarfsgerechte Anpassung an Lastfälle, Belastungen bzw. Einbausituationen zu erzielen. Aus dem Stand der Technik ist kein Verfahren bekannt, dass eine derartige Freiheit in der Variation der Querschnittsgeometrie bei gleichzeitiger Variation der Außenumfangswerte des Kunststoffprofils ermöglicht.

Die Konsolidierung kann eine Druckbeaufschlagung des Thermoplastbandes beinhaltet. Die Druckbeaufschlagung kann dabei über eine druckaufbringende Vorrichtung, insbesondere eine mitlaufende Rolle erfolgen.

Die Erwärmung des Thermoplastbandes kann mittels Konvektionserwärmung und/oder mittels Laserstrahlung und/oder Infrarotlichtstrahlung und/oder mittels einer Induktionserwärmung und/oder mittels einer Plasmaquelle erfolgen. Vorzugsweise erfolgt die Erwärmung des Thermoplastbandes unmittelbar während des Aufbringens des Thermoplastbandes auf die Trägerkernstruktur. Weiter vorzugsweise lokal im Aufbringungsbereich des Thermoplastbandes. Hierzu eignen sich insbesondere Wärmequellen mit einer hohen Energiedichte, wie beispielsweise Laser oder Plasmaquellen. Die Erwärmung des Thermoplastbandes kann zudem über eine Erwärmung der Trägerkernstruktur erfolgen. Insbesondere bei einer zumindest teilweisen metallischen Trägerkernstruktur oder Metallpartikel oder Metallfasern oder Kohlefasern oder Metallgewebe oder Kohlefasergewebe enthaltende oder mit einer elektrisch leitfähigen, insbesondere metallischen Beschichtung versehenen Trägerkernstruktur bietet sich hierbei ein Induktionsverfahren an, bei welchem über ein magnetisches Wechselfeld die Trägerkernstruktur erwärmt wird, vorzugsweise partiell im Aufbringungsbereich des Thermoplastbandes erwärmt wird.

Die Trägerkernstruktur kann nach oder während der Konsolidierung des Thermoplastbandes entfernt werden.

Das Bereitstellen der Trägerkernstruktur umfasst die Kombination eines Extrusionsprozesses und eines Blasformprozesses und den Einsatz eines Corrugators. Ein Extrusionsprozess in Kombination mit einem Blasformprozess ermöglicht eine kostengünstige und kontinuierliche Herstellung der Trägerkernstruktur. Die kontinuierliche Herstellung der Trägerkernstruktur ermöglicht die Integration des Bereitstellens der Trägerkernstruktur in einem kontinuierlichen Gesamtproduktionsprozess, der es ermöglicht, das Kunststoffprofil wirtschaftlich und mit hohen Stückzahlen herzustellen. Auf Corrugatoren können Endlosprodukte mit einem variierenden Außenumfang produziert werden. Das Verfahren wird dabei allgemein dem Blasformen zugeordnet. Ein Spritzkopf, auch Düse genannt, formt dabei einen Schmelzestrom aus einem Extruder zu einem schlauchähnlichen Extrudat. Die Wanddicken des Extrudats können durch eine Anpassung der Extrusionsgeschwindigkeit verändert werden. Dies ist insbesondere dann von Vorteil, wenn die Formbacken des Corrugators Bereiche mit hohen Verformungsgraden aufweisen und die Wanddicke des Extrudats so angepasst wird, dass die Trägerkernstruktur trotz der lokal höheren Verformungsgrade eine zumindest im Wesentlichen gleiche Wanddicke aufweist. Die Wanddicke des Extrudats lässt sich ggf. auch über einen variablen Düsenspalt einstellen. Durch den Spritzkopf kann neben der Energie- und Medienversorgung (Wasser, Vakuum, Luft) für einen Kühldorn auch eine Zuleitung von Formluft erfolgen. Bei Extrudaten die einen größeren Durchmesser als etwa 5 cm aufweisen, kann zusätzlich ein Vakuum an die Formbacken angelegt werden. Bei entsprechend kleineren Durchmessern erfolgt der Anpressdruck des Extrudats an die Formbacken allein durch die Formluft. Die Formbacken stellen die Negativform der Trägerkernstruktur dar. Die Formbacken sind umlaufend angeordnet, so dass die Trägerkernstruktur in einem kontinuierlich laufenden und wiederholenden Formgebungsprozess bereitgestellt werden können. Das Extrudat bzw. die Trägerkernstruktur kann über ein Vakuum an die Formbacken gesaugt. Wie erwähnt können größere Durchmesser in der Regel nur unter Zuhilfenahme einer Vakuumabsaugung hergestellt werden. Die Formluft strömt hinter dem Extrudat aus der Düse und erzeugt dort einen Überdruck, der die Schmelze an die Formbacken drückt. Damit die Formluft nicht durch das Extrudat entweichen kann, wird hier ein Dichtdorn verwendet, der über eine Stange mit der Düse verbunden ist und innerhalb des Corrugators endet.

Die Trägerkernstruktur kann alternativ durch einen Drahtkörper oder einen Textilkörper oder einen mehrteiligen Modulkörper oder einen Schaumkörper gebildet sein. Insbesondere ein Drahtkörper oder ein Textilkörper oder ein mehrteiliger Modulkörper können nach oder während der Konsolidierung des Thermoplastbandes aus dem Kunststoffprofil wieder entnommen werden. Aufgrund des geringen Eigengewichts kann demgegenüber ein Schaumkörper innerhalb des Kunststoffprofils verbleiben. Der Drahtkörper kann vorzugsweise aus einem Aluminium- oder Kupfer- oder Eisen- oder Titan-Werkstoff gebildet sein. Der Werkstoff des Schaumkörpers kann insbesondere aus Polyurethan (PUR) gebildet sein. Der mehrteilige Modulkörper ist aus einzelnen Formteilen zusammengefügt. Der mehrteilige Modulkörper kann dabei durch ein Basisrohr oder ein Spritzgussteil oder ein Blasformteil als Hauptformteil mit separat angeformten Nebenformteilen gebildet sein. Das zusammenfügen bzw. anformen kann durch Kleben, Schweißen, Formschluss oder jedwedes andere Fügeverfahren erfolgen.

Das Thermoplastband kann vor dem Aufbringen auf die Trägerkernstruktur zumindest teilweise vorgewärmt werden. Dies mit dem Ziel, die Flexibilität des Thermoplastbandes zu erhöhen. In vorteilhafter Weise ermöglichen das teilweise oder abschnittsweise Vorwärmen bzw. das komplette Vorwärmen des Thermoplastbandes, und die damit verbundene Erhöhung der Flexibilität des Thermoplastbandes, dass sich dieses leichter an die Außenkontur der Trägerkernstruktur anlegt bzw. anpasst. Des Weiteren verringert sich die zur Erwärmung des Thermoplastbandes bis an oder bis über die Schmelztemperatur der thermoplastischen Matrix notwendige Energiemenge.

Die Trägerkernstruktur kann auf einer Förderstrecke bewegt werden und die einzelnen Verfahrensschritte können entlang dieser Förderstrecke erfolgen. Bei Einsatz eines Extrusionsprozesses zur Herstellung bzw. Bereitstellung der Trägerkernstruktur können sämtliche nachfolgende Verfahrensschritte entlang dieser Förderstrecke automatisiert erfolgen, sodass sich das erfindungsgemäße Verfahren durch eine hohe Wirtschaftlichkeit auszeichnet.

Die Faserverstärkung des Thermoplastbandes kann durch Mineralfasern, insbesondere Glasfasern und/oder durch Carbonfasern und/oder durch Aramidfasern und/oder durch polymere Fasern und/oder durch synthetische Fasern und/oder durch Fasern von nachwachsenden Rohstoffen gebildet sein.

Die thermoplastische Matrix des Thermoplastbandes kann Polyamid (PA), und/oder Polypropylen (PP), und/oder Acrylnitril-Butadien-Styrol (ABS), und/oder Polyethylen (PE), und/oder vernetztes Polyethylen (PE-X), und/oder thermoplastische Polyurethane (TPE), und/oder Polybutylenterephthalat (PBT) und/oder Polyphenylensulfid (PES) und/oder Polyethylenterephthalat (PET) umfassen.

Die Fasergehalte können dabei im Bereich von 30 Gew.-% bis 80 Gew.-% in Bezug auf die thermoplastische Matrix liegen. Bekannte Hersteller derartiger Thermoplastbänder sind die Firmen Baycomp, Bond-Laminates, Comat, Fiberforge, Tecona, Teknosav, Polystrand oder Elekon. Die Verarbeitungstemperaturen liegen je nach gewähltem Matrixsystem z.B. bei Polyamid und einer Glasfaserverstärkung bei etwas 210 °C, bei Polypropylen mit einer Glasfaserverstärkung in einem Bereich zwischen 220 °C bis 240 °C und bei einem Polyamid mit einer Glasfaserverstärkung in einem Temperaturbereich zwischen 260 °C bis 280 °C. Die typischen Abmessungen des Thermoplastbandes weisen eine Banddicke von 0,1 mm bis 0,8 mm, vorzugsweise 0,2 mm bis 0,5 mm, weiter vorzugsweise 0,25 mm auf. Die Breite des Thermoplastbandes liegt vorzugsweise in einem Bereich zwischen 20 mm bis 700 mm.

Die mit dem erfindungsgemäßen Verfahren hergestellten Bauteile können in vielfältiger Art und Weise eingesetzt werden. So kann das Kunststoffprofil insbesondere als Bauteil für Crashmanagementsysteme (CMS) in Kraftfahrzeugen, als Bestandteil einer eine Öffnung des Fahrzeugs verschließenden Klappe oder Tür, als tragendes Bauteil eines Kraftfahrzeug-Karosseriesystems oder allgemein als Kraftfahrzeug-Strukturbauteil ausgebildet sein. Hierbei können im Einzelnen als Kraftfahrzeuganwendungen Querträger, Dachträger, Dachrahmen, Space Frames, insbesondere auch Space Frame-Strukturen, Frontendträger, Türelemente, insbesondere Türrahmenelemente, aber auch Integralsitze wie Vorder- und Rücksitze von Kraftfahrzeugen im Allgemeinen genannt werden. Alternativ hierzu kann das mit dem erfindungsgemäßen Verfahren hergestellte Kunststoffprofil als Flugzeug-Strukturbauteil ausgebildet sein. Ganz allgemein ist das erfindungsgemäße Verfahren insbesondere zur Herstellung von Bauteilen für Transportmittel geeignet, welche neben Kraftfahrzeugen und Flugzeugen insbesondere auch den Eisenbahn- sowie den Schiffsbau etc. umfasst.

Im Folgenden wird die Erfindung anhand lediglich Ausführungsbeispiele darstellender Zeichnungen ausführlich erläutert. Gleiche oder funktionsgleiche Elemente werden mit den gleichen Bezugszeichen versehen.

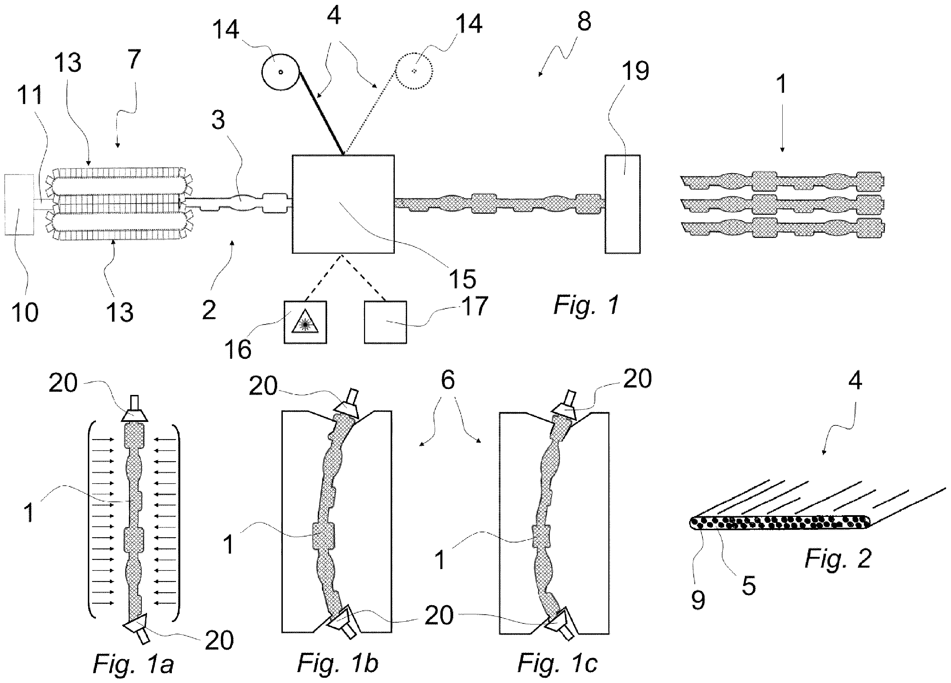

Die Figur 1 zeigt den Aufbau einer entlang einer Förderstrecke 8 kontinuierlich arbeitenden Anlage zur Umsetzung des erfindungsgemäßen Verfahrens. Das Verfahren zur Herstellung von endlosfaserverstärkten Kunststoffprofilen 1 aus thermoplastischen Kunststoffen umfasst die folgenden Schritte: Bereitstellen einer zumindest eine Grobkonturierung 2 des Kunststoffprofils 1 vorgebenden Trägerkernstruktur 3, wobei die jeweiligen Querschnittsflächen Q entlang der Längserstreckungsrichtung der Trägerkernstruktur 3 voneinander abweichende Außenumfangswerte U, U', U" aufweisen und mindestens ein Außenumfangswert U, U', U" mehrfach durchlaufen wird, aufbringen mindestens eines endlosfaserverstärkten Thermoplastbandes 4 auf die äußere Fläche der Trägerkernstruktur 3, vorzugsweise durch Umwickeln und/oder Umflechten der Trägerkernstruktur 3, nachfolgende oder gleichzeitige Erwärmung des Thermoplastbandes 4 bis an oder bis über die Schmelztemperatur der thermoplastischen Matrix 5 des Thermoplastbandes 4 und Konsolidierung des Thermoplastbandes 4 zu einem einen geschlossenen Profilquerschnitt aufweisenden endlosfaserverstärkten Kunststoffprofil 1. Durch einen dem Fachmann bekannten Extruder 10 wird eine plastifizierte Kunststoffmasse 11 aus einer formgebenden Düse 12 extrudiert und in einen so genannten Corrugator 7 gefördert. Die Fördergeschwindigkeit des Extruders 10 ist dabei an die Umlaufgeschwindigkeit der umlaufenden Formbacken 13 des Corrugators 7 angepasst bzw. wird so variiert, dass durch die innerhalb des Corrugators 7 bzw. innerhalb dessen umlaufender Formbacken 13 entstehende Trägerkernstruktur 3 diese eine weitgehend gleichmäßige Wanddicke aufweist. Im weiteren Verlauf der Förderstrecke 8 kühlt die Trägerkernstruktur 3 soweit ab, dass sie eine ausreichende mechanische Stabilität aufweist, so dass ein endlosfaserverstärktes Thermoplastband 4 auf die Trägerkernstruktur 3 aufgebracht werden kann. Das Thermoplastband 4 wird in dem hier gezeigten Ausführungsbeispiel kontinuierlich von einer Rolle 14 abgenommen und innerhalb einer Wickel-Flechtanlage 15 auf die äußere Fläche der Trägerkernstruktur 3 aufgebracht. Gestrichelt angedeutet ist eine zweite Rolle 14 mit einem zweiten Thermoplastband 4 für ein Umflechten der Trägerkernstruktur 3 mit mehreren Thermoplastbändern 4. Die Erwärmung des Thermoplastbandes 4 bis an oder über die Schmelztemperatur der thermoplastischen Matrix 5 des Thermoplastbandes 4 erfolgt mittels Laserstrahlung, welche von einem Laser 16 in die Wickel-Flechtanlage 15 eingestrahlt wird (z.B. über eine Glasfaser und entsprechende Optiken). Unterstützend kann Infrarotlichtstrahlung von einem Infrarotstrahler 17 zugeschaltet werden um das Thermoplastband 4 großflächig zu Erwärmen. Die Bereitstellung eines Konsolidierungsdruckes erfolgt über die Wicklung bzw. Flechtung selbst oder wird über eine Andruckrolle 18 realisiert. Das die Wickel-Flechtanlage 15 verlassende endlosfaserverstärkte Kunststoffprofil 1 wird über eine Abzugs- und Ablängungseinheit 19 geführt und auf Maß konfektioniert. Das konfektionierte Kunststoffprofil 1 wird anschließend in ein die endgültige Kontur des Kunststoffprofils 1 formendes Formwerkzeug 6 eingebracht, wobei eine erneute Erwärmung (in Figur 1a durch eine Konvektionserwärmung in einem Ofen schematisch dargestellt) des Kunststoffprofils 1 bis an oder bis über die Schmelztemperatur der thermoplastischen Matrix 5 des Thermoplastbandes 4 erfolgt. Innerhalb des Formwerkzeuges 6 kann sowohl die Außengeometrie des Kunststoffprofils bzw. die Geometrie der Querschnittsflächen Q des Kunststoffprofils 1 verformt, als auch das Kunststoffprofil 1 einer Biegung, Verdrehung, Faltung oder Umformung unterworfen werden. Die Figur 1 b zeigt eine im Wesentlichen auf eine Biegung des Kunststoffprofils 1 begrenzte Verformung. In Figur 1c wird das Kunststoffprofil 1 neben einer Biegung auch einer Änderung der Außengeometrie bzw. Änderung der Geometrie der Querschnittsflächen Q des Kunststoffprofils 1 unterworfen. Das Kunststoffprofil 1 ist als Kunststoffhohlprofil ausgebildet. An den offenen Enden des Kunststoffhohlprofils werden Dichtungselemente 20 angebracht mittels derer sich der Innendruck in dem Kunststoffhohlprofil erhöhen lässt. Der erhöhte Innendruck presst das Kunststoffhohlprofil an die Wandungen des Formwerkzeuges 6. Hierbei wird das als Kunststoffhohlprofil ausgebildete Kunststoffprofil 1 über die Innendruck-Beaufschlagung gegen die die endgültige Außenkontur formenden Wandungen des Formwerkzeugs 6 gepresst. Gleichzeitig kann durch den erhöhten Innendruck ein Zusammenfallen bzw. Zusammenquetschen des Kunststoffhohlprofils 1 durch das zusammenfahrende Formwerkzeug vermieden werden.

Die Figuren 2 bis 6 zeigen weitere mögliche Verfahren zur Herstellung bzw. zur Bereitstellung der Trägerkernstruktur.

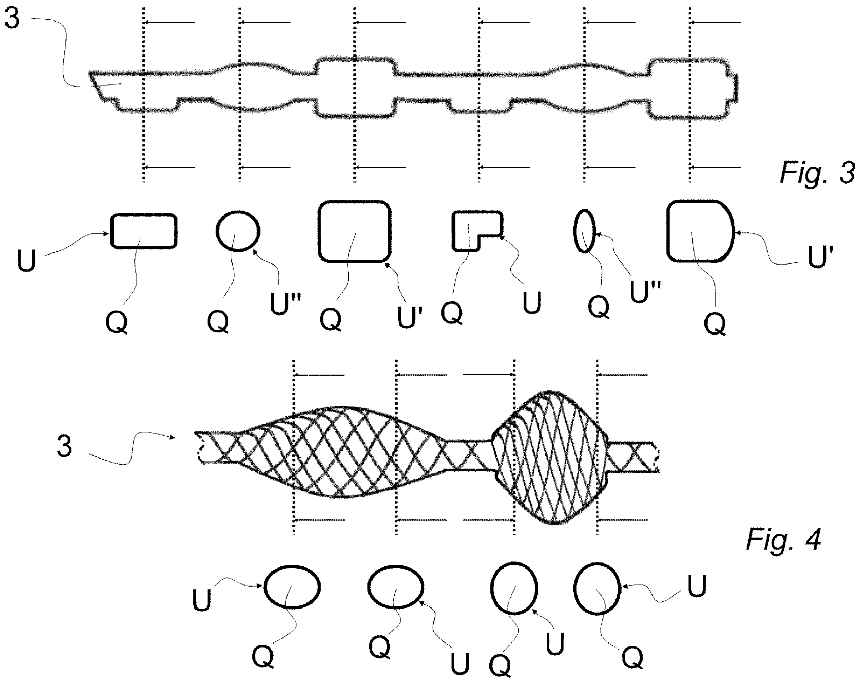

Die Figur 3 zeigt eine mittels eines Corrugators 7, also einem umlaufenden Blasformwerkzeug, hergestellte Trägerkernstruktur 3. Die jeweiligen Querschnittsflächen Q entlang der Längserstreckungsrichtung der Trägerkernstruktur 3 weisen voneinander abweichende Außenumfangswerte U, U', U" und voneinander abweichende Querschnittsgeometrien auf. Mindestens ein Außenumfangswert U, U', U" wird mehrfach durchlaufen. Die Trägerkernstruktur 3 bzw. das Kunststoffprofil 1 weist eine kreisförmige und/oder eine ovale und/oder eine rechteckige und/oder eine vieleckige Querschnittsgeometrie Q auf.

Die Figur 4 zeigt einen Drahtkörper, welcher durch eine Stauchung lokale Änderungen des Außenumfangs U aufweist. Mindestens ein Außenumfangswert U wird mehrfach durchlaufen, wobei die jeweilige Querschnittsgeometrie Q voneinander abweicht. Insbesondere ein Drahtkörper oder ein Textilkörper oder ein mehrteiliger Modulkörper können nach oder während der Konsolidierung des Thermoplastbandes aus dem Kunststoffprofil wieder entnommen werden. Der Drahtkörper ist vorzugsweise aus einem Aluminium- oder Kupfer- oder Eisen- oder Titan-Werkstoff gebildet.

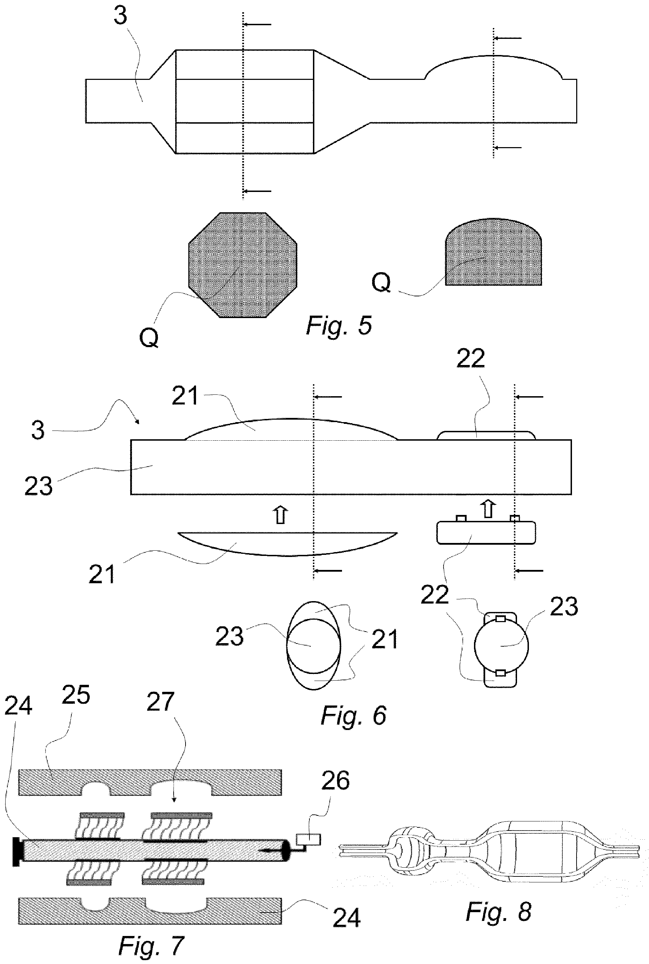

Die Figur 5 zeigt eine Trägerkernstruktur 3 die als Schaumkörper ausgebildet ist. Aufgrund des geringen Eigengewichts kann der Schaumkörper innerhalb des durch das Aufbringen und Konsolidieren mindestens eines endlosfaserverstärkten Thermoplastbandes 4 gebildeten Kunststoffprofils 1 verbleiben. Der Schaumkörpers ist aus Polyurethan (PUR) gebildet.

Die Figur 6 zeigt eine Trägerkernstruktur 3 die als mehrteiligen Modulkörper ausgebildet ist. Der mehrteilige Modulkörper ist aus einzelnen Formteilen 21, 22, 23 zusammengefügt. Der mehrteilige Modulkörper kann dabei durch ein Basisrohr oder ein Spritzgussteil oder ein Blasformteil als Hauptformteil 23 mit separat angeformten Nebenformteilen 21, 22 gebildet sein. Das zusammenfügen bzw. anformen kann durch Kleben, Schweißen, Formschluss oder jedwedes andere Fügeverfahren erfolgen.

Die Figur 7 zeigt eine weitere Alternative zur Herstellung der Trägerkernstruktur 3. Ein Kunststoffrohr 24 wird so abgedichtet, dass es von Innen mit Druck beaufschlagt werden kann. In den Bereichen, in welchen die Außenumfangswerte U der Querschnittsflächen Q der Trägerkernstruktur 3 verändert werden sollen, wird die Wandung bzw. der Bereich bzw. der Abschnitt des Kunststoffrohres 24 partiell über Wärmequellen 27 erwärmt und anschließend zwei die Kontur der Trägerkernstruktur 3 formende Formhälften 25 geschlossen. Anschließend (hier nicht näher dargestellt) wird das Kunststoffrohr 24 an seinen offenen Enden verschlossen und von Innen mittels einer Druckmedienquelle 26 mit Druck beaufschlagt, so dass sich die partiell erwärmten Bereiche des Kunststoffrohres 24 an die Wandungen der Formhälften 25 anlegen.

Die Figur 8 zeigt eine entsprechend gemäß Figur 7 hergestellte hergestellte Trägerkernstruktur 3, wobei die jeweiligen Querschnittsflächen entlang der Längserstreckungsrichtung der Trägerkernstruktur 3 voneinander abweichende Außenumfangswerte aufweisen und mindestens ein Außenumfangswert mehrfach durchlaufen wird.

Alternativ lässt sich die in Figur 8 dargestellte Trägerkernstruktur 3 auch mittels eines Blasformverfahrens herstellen. Zunächst wird kontinuierlich oder auch diskontinuierlich ein Schlauch aus einem formbaren Kunststoffvorformling in der Regel der Schwerkraft folgend senkrecht nach unten aus einer Düse ausgestoßen. Die Materialstärke im Schlauch kann dabei düsenseitig entsprechend der Außengeometrie der Trägerkernstruktur variiert werden. Entsprechende Vorrichtungen sind dem Fachmann bekannt. Anschließend fährt ein Dorn von oben oder unten in den Schlauch ein. Das zu diesem Zeitpunkt noch geöffnete meist zweigeteilte Blaswerkzeug fährt zu und umhüllt den Schlauch mitsamt dem Dorn. Durch den Dorn wird sodann Druckluft in den Schlauch gepresst, womit dieser aufgeblasen und an die Kontur des Blaswerkzeugs angepresst und abgekühlt wird. Der Kunststoff passt sich so der vorgegebenen Form des Blaswerkzeugs an und wird fest.

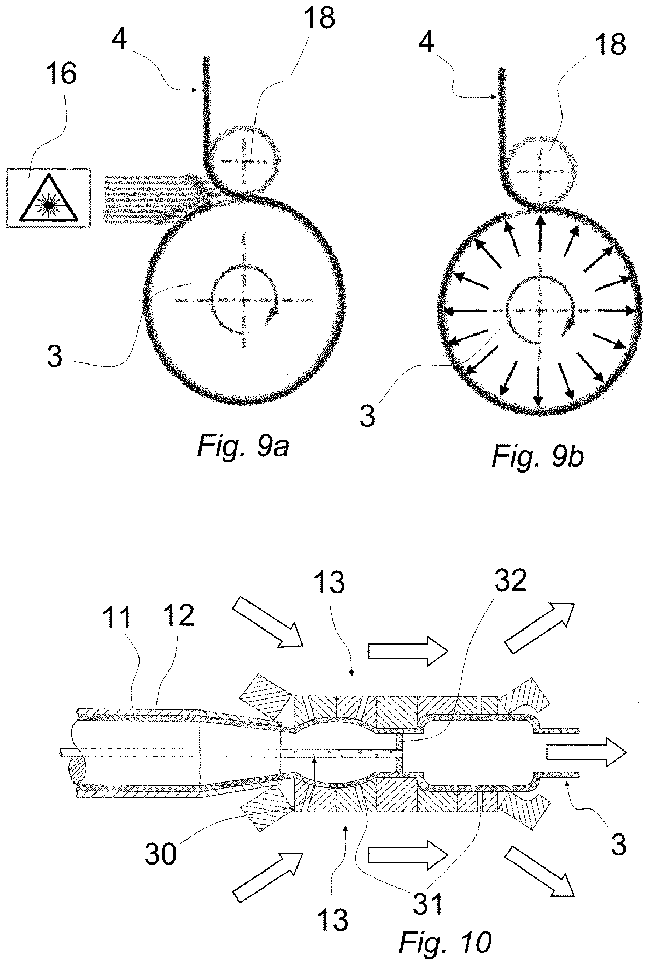

Die Figuren 9a und 9b zeigen zwei mögliche Alternativen zur Erwärmung des Thermoplastbandes 4. In der Figur 9a ist schematisch dargestellt, dass ein Laser 16 eine Laserstrahlung (Strahlleitung und Fokusierung hier nicht näher dargestellt) in den beim Aufbringen des Thermoplastbandes 4 auf die Trägerkernstruktur 3 zwischen Thermoplastband 4 und Trägerkernstruktur 3 gebildeten Spalt einstrahlt. Die in Wärme umgewandelte absorbierte Laserstrahlung erwärmt das Thermoplastband 4 bis an oder bis über die Schmelztemperatur der thermoplastischen Matrix des Thermoplastbandes 4. Die Trägerkernstruktur 3 wird in eine Rotation versetzt, so dass das Thermoplastband 4 selbstständig von einer hier nicht näher dargestellten Rolle abgerollt wird. Die Konsolidierung des Thermoplastbandes 4 beinhaltet eine Druckbeaufschlagung mittels einer Andruckrolle 18.

Die Figur 10 zeigt einen Detailausschnitt aus einem verkürzt dargestellten Corrugator 7 zum Bereitstellen der Trägerkernstruktur 1. Eine Düse 12 formt dabei einen Schmelzestrom 11 aus einem Extruder zu einem schlauchähnlichen Extrudat. Durch die Düse 12 ist eine Zuleitung für Formluft vorgesehen, welche das Extrudat an die umlaufenden Formbacken 13 (durch Pfeile angedeutet) des Corrugators 7 drückt. Die Formluft strömt hinter dem Extrudat aus mehreren Formluftdüse 30 und erzeugt dort den Überdruck, der die Schmelze an die Formbacken 13 drückt. Zusätzlich wird über entsprechende Kanäle 31 in den Formbacken 13 ein Vakuum angelegt. Die Formbacken 13 sind umlaufend angeordnet, so dass die Trägerkernstruktur 3 in einem kontinuierlich laufenden und wiederholenden Formgebungsprozess bereitgestellt wird. Damit die Formluft nicht nach vorne durch das Extrudat entweichen kann, wird ein Dichtdorn 32 verwendet, der über eine Stange (dient auch als Zuleitung für die Formluft) mit der Düse 12 verbunden ist und innerhalb des Corrugators 7 endet.

## Patentansprüche

1. Verfahren zur Herstellung von endlosfaserverstärkten Kunststoffprofilen (1) aus thermoplastischen Kunststoffen, umfassend die folgenden Schritte:
- kontinuierliche Bereitstellung einer zumindest eine Grobkonturierung (2) des Kunststoffprofils (1) vorgebenden Trägerkernstruktur (3),
- wobei die jeweiligen Querschnittsflächen (Q) entlang der Längserstreckungsrichtung der Trägerkernstruktur (3) voneinander abweichende Außenumfangswerte (U, U') aufweisen und mindestens ein Außenumfangswert (U, U') mehrfach durchlaufen wird,
- Aufbringen mindestens eines endlosfaserverstärkten Thermoplastbandes (4) auf die äußere Fläche der Trägerkernstruktur (3), vorzugsweise durch Umwickeln und/oder Umflechten der Trägerkernstruktur (3),
- nachfolgende oder gleichzeitige Erwärmung des Thermoplastbandes (4) bis an oder bis über die Schmelztemperatur der thermoplastischen Matrix (5) des Thermoplastbandes (4),
- Konsolidierung des Thermoplastbandes (4) zu einem einen geschlossenen Profilquerschnitt aufweisenden endlosfaserverstärkten Kunststoffprofil (1), wobei das Kunststoffprofil (1) als Kunststoffhohlprofil ausgebildet ist,
**dadurch gekennzeichnet, dass**
das kontinuierliche Bereitstellen der Trägerkernstruktur (3) die Kombination eines Extrusionsprozess und eines Blasformprozess und den Einsatz eines Corrugators (7) umfasst.

2. Verfahren nach Anspruch 1, **dadurch gekennzeichnet, dass** mindestens ein Außenumfangswert (U, U') dreifach durchlaufen wird.

3. Verfahren nach einem der vorstehenden Ansprüche, **dadurch gekennzeichnet, dass** das Kunststoffprofil (1) in ein die endgültige Kontur des Kunststoffprofils (1) formendes Formwerkzeug (6) eingebracht wird, wobei bedarfsweise eine erneute Erwärmung des Kunststoffprofils (1) bis an oder bis über die Erweichungstemperatur der thermoplastischen Matrix (5) des Thermoplastbandes (4) erfolgt.

4. Verfahren nach einem der vorstehenden Ansprüche, **dadurch gekennzeichnet, dass** die Konsolidierung eine Druckbeaufschlagung des Thermoplastbandes (4) beinhaltet.

5. Verfahren nach einem der vorstehenden Ansprüche, **dadurch gekennzeichnet, dass** die Trägerkernstruktur (3) bzw. das Kunststoffprofil (1) eine kreisförmige und/oder eine ovale und/oder eine rechteckige und/oder eine vieleckige Querschnittsgeometrie aufweist.

6. Verfahren nach einem der vorstehenden Ansprüche, **dadurch gekennzeichnet, dass** die Erwärmung des Thermoplastbandes (4) mittels Konvektionserwärmung und/oder mittels Laserstrahlung und/oder mittels Infrarotlichtstrahlung und/oder mittels einer Induktionserwärmung und/oder mittels einer Plasmaquelle erfolgt.

7. Verfahren nach einem der vorstehenden Ansprüche, wobei das endlosfaserverstärkte Kunststoffprofil als Bauteil für Crashmanagementsysteme in Kraftfahrzeugen, als tragendes Bauteil eines Kraftfahrzeug-Karosseriesystems, als Bauteil einer eine Öffnung des Fahrzeugs verschließenden Klappe oder Tür, oder allgemein als Kraftfahrzeug-Strukturbauteil oder als Flugzeug-Strukturbauteil ausgebildet ist.

## Claims

1. Process for producing endless-fibre-reinforced plastics profiles (1) from thermoplastics comprising the steps of:
- continuous provision of a supporting core structure (3) which specifies at least one coarse contouring (2) of the plastics profile (1),
- wherein the respective cross sectional areas (Q) along the longitudinal direction of the supporting core structure (3) have different outer circumference values (U,U') and at least one outer circumference value (U,U') occurs two or more times,
- application of at least one endless-fibre-reinforced thermoplastic tape (4) onto the outer surface of the supporting core structure (3), preferably by wrapping and/or braiding around the supporting core structure (3),
- subsequent or simultaneous heating of the thermoplastic tape (4) to or beyond the melting point of the thermoplastic matrix (5) of the thermoplastic tape (4),
- consolidation of the thermoplastic tape (4) to afford an endless-fibre-reinforced plastics profile (1) having a closed-profile cross section,
- wherein the plastics profile (1) is configured as a hollow plastics profile,
**characterized in that**
the continuous provision of the supporting core structure (3) comprises the combination of an extrusion process and a blow molding process and the use of a corrugator (7).

2. Process according to Claim 1, **characterized in that** at least one outer circumference value (U,U') occurs three times.

3. Process according to any of the preceding claims, **characterized in that** the plastics profile (1) is introduced into a mold (6) which molds the final contour of the plastics profile (1), wherein renewed heating of the plastics profile (1) to or beyond the melting point of the thermoplastic matrix (5) of the thermoplastic tape (4) is effected as required.

4. Process according to any of the preceding claims, **characterized in that** the consolidation includes application of pressure to the thermoplastic tape (4).

5. Process according to any of the preceding claims, **characterized in that** the supporting core structure (3)/the plastics profile (1) has a circular and/or an oval and/or a rectangular and/or a polygonal cross sectional geometry.

6. Process according to any of the preceding claims, **characterized in that** the heating of the thermoplastic tape (4) is effected by means of convection heating and/or by means of laser radiation and/or by means of infrared radiation and/or by means of induction heating and/or by means of a plasma source.

7. Process according to any of the preceding claims, wherein the endless-fibre-reinforced plastics profile is configured as a component for crash management systems in motor vehicles, as a load-bearing component of a motor vehicle body system, as a component of a latch or door which seals an opening in the vehicle or generally as a motor vehicle structural component or as an aeroplane structural component.

## Revendications

1. Procédé de fabrication de profilés de matière plastique renforcée par des fibres continues (1) à partir de matières plastiques thermoplastiques, comprenant les étapes consistant à :
- fournir en continu une structure de noyau de support (3) déterminant au moins un contour grossier (2) du profilé de matière plastique (1),
- dans lequel les surfaces en section transversale respectives (Q) le long de la direction d'extension longitudinale de la structure de noyau de support (3) présentent des valeurs de la circonférence extérieure (U, U') différentes les unes des autres et au moins une valeur de la circonférence extérieure (U, U') est parcourue plusieurs fois,
- déposer au moins une bande de matière thermoplastique (4) renforcée par des fibres continues sur la surface extérieure de la structure de noyau de support (3), de préférence par enrobage et/ou tressage autour de la structure de noyau de support (3),
- chauffer ensuite ou simultanément la bande de matière thermoplastique (4) jusqu'à une température supérieure ou égale au point de fusion de la matrice thermoplastique (5) de la bande de matière thermoplastique (4),
- consolider la bande de matière thermoplastique (4) en un profilé de matière plastique (1) renforcé par des fibres continues présentant une section transversale de profilé fermée, dans lequel le profilé de matière plastique (1) est réalisé sous la forme d'un profilé creux en matière plastique,
**caractérisé en ce que** la fourniture en continu de la structure de noyau de support (3) comprend la combinaison d'un processus d'extrusion et d'un processus de soufflage et l'insertion d'un élément d'ondulation (7).

2. Procédé selon la revendication 1, **caractérisé en ce qu'**une valeur de circonférence externe (U, U') est parcourue trois fois.

3. Procédé selon l'une quelconque des revendications précédentes, **caractérisé en ce que** le profilé de matière plastique (1) est introduit dans un outil de formage (6) formant un contour définitif du profilé de matière plastique (1), dans lequel un chauffage du profilé de matière plastique (1) est de nouveau effectué selon les besoins jusqu'à une température supérieure ou égale à la température de ramollissement de la matrice thermoplastique (5) de la bande de matière thermoplastique (4).

4. Procédé selon l'une quelconque des revendications précédentes, **caractérisé en ce que** la consolidation consiste à appliquer une pression à la bande de matière thermoplastique (4).

5. Procédé selon l'une quelconque des revendications précédentes, **caractérisé en ce que** la structure de noyau de support (3) ou le profil de matière plastique (1) présente une géométrie de section transversale circulaire et/ou ovale et/ou rectangulaire et/ou polygonale.

6. Procédé selon l'une quelconque des revendications précédentes, **caractérisé en ce que** le chauffage de la bande de matière thermoplastique (4) est effectué par chauffage par convexion et/ou au moyen d'un rayonnement laser et/ou au moyen d'un rayonnement de lumière infrarouge et/ou par chauffage par induction et/ou au moyen d'une source de plasma.

7. Procédé selon l'une quelconque des revendications précédentes, **caractérisé en ce que** le profilé de matière plastique renforcé par des fibres continues est réalisé sous la forme d'un composant destiné à des systèmes de gestion d'accidents dans des véhicules automobiles, en tant que composant de support d'un système de carrosserie de véhicule automobile, en tant que composant d'une trappe refermant une ouverture du véhicule ou de manière générale, en tant que composant structurel de véhicule automobile ou en tant que composant structurel d'aéronef.
